# EUROPÄISCHE PATENTANMELDUNG

(11) **EP 2 644 062 A1**
(43) Veröffentlichungstag der Anmeldung: **02.10.2013**
(21) Anmeldenummer: 12162299.7
(22) Anmeldetag: 29.03.2012
(51) Int. Cl.: A47G 23/02, A47J 43/044

(54) **Trinkgefäßhalter, Trinkgefäßsystem, Mixsystem, Verfahren zum Herstellen eines Mixgetränks und Verwendung eines Trinkgefäßhalters**

(71) Anmelder: Saach Holding AG, 9050 Appenzell (CH)
(72) Erfinder: Rapp, Willi, 70619 Stuttgart-Riedenberg (DE)
(74) Vertreter: Witte, Weller & Partner

(57) **Zusammenfassung**

Trinkgefäßhalter (10) zur Aufnahme eines separaten Trinkgefäßes (12), wobei der Trinkgefäßhalter (10) eine Aufhängung (16) aufweist, die dafür ausgebildet ist, an einem Gegenstück (18) eines Mixers (20) lösbar gehalten zu werden, wobei die Aufhängung (16) so dimensioniert ist, dass das vom Trinkgefäßhalter (10) aufgenommene Trinkgefäß (12), wenn der Trinkgefäßhalter (10) am Gegenstück (18) gehalten ist, relativ zu einem Mixstab (22) des Mixers (20) so positioniert ist, dass der Mixstab (22) in das Trinkgefäß (12) hineinragt und mindestens ein im Trinkgefäß (12) befindlicher Bestandteil (24) gemixt werden kann. Ferner werden ein Trinkgefäßsystem (34) mit einem Trinkgefäßhalter (10) und einem Trinkgefäß (12) und ein Mixsystem (32) mit einem Trinkgefäßhalter (10) und einem Mixer (20) mit einem Mixstab (22) offenbart. Außerdem werden ein Verfahren (60) zum Herstellen eines Mixgetränks und eine Verwendung eines Trinkgefäßhalters (10) aufgezeigt.

## Beschreibung

Die vorliegende Erfindung betrifft einen Trinkgefäßhalter zur Aufnahme eines separaten Trinkgefäßes.

Die Erfindung betrifft ferner ein Trinkgefäßsystem mit einem solchen Trinkgefäßhalter und einem Trinkgefäß.

Die Erfindung betrifft zudem ein Mixsystem mit einem solchen Trinkgefäßhalter und einem Mixer mit einem Mixstab.

Die Erfindung betrifft außerdem ein Verfahren zum Herstellen eines Mixgetränks.

Schließlich betrifft die Erfindung auch eine Verwendung eines Trinkgefäßhalters.

Geräte zum Herstellen von Mixgetränken sind bekannt und werden oftmals als Mixer bezeichnet. Solche Geräte werden vorwiegend zum Herstellen von Mixgetränken mit Milch, Joghurt, Pulver, Alkohol oder Früchten verwendet. Lediglich beispielhaft sei für derartige Geräte der Mixer M98 der Firma NOSCH GmbH genannt.

Die wesentlichen Bestandteile eines solchen Mixers sind ein Gestell, ein Motor, ein Mixstab und ein üblicherweise am Gestell des Mixers angeordnetes Gegenstück, an dem ein Mixbecher lösbar gehalten werden kann.

Um mit einem bekannten Mixer ein Mixgetränk herzustellen, werden zunächst der mindestens eine Bestandteil des Mixgetränks in den Mixbecher gefüllt. Der Mixbecher wird dann mit dem Gegenstück gekoppelt, insbesondere wird ein Rand des Mixbechers am Gegenstück eingehängt. Während des Positionierens des Mixbechers am Gegenstück, taucht der Mixstab in den Mixbecher ein. Wenn der Mixbecher am Gegenstück gehalten wird, ist der Mixstab in den mindestens einen Bestandteil im Mixbecher eingetaucht.

Die korrekte Positionierung des Mixbechers wird anhand eines Sicherheitsschalters überprüft. Dadurch kann verhindert werden, dass der Mixer ohne Mixbecher bzw. ohne einen korrekt positionierten Mixbecher betrieben werden kann. In der Regel wird der Sicherheitsschalter bei einer korrekten Positionierung von einem oberen Abschnitt, insbesondere von einem Rand des Mixbechers betätigt.

Zum Herstellen des Mixgetränks wird nun der Motor des Mixers eingeschaltet und so der Mixstab in schnelle Rotation versetzt, die üblicherweise zwischen 5.000 bis 20.000 U/min beträgt. Wenn eine ausreichende Durchmischung im Mixbecher erzielt ist, wird der Motor abgeschaltet und der Mixbecher entnommen. Das fertige Mixgetränk wird dann in ein Trinkgefäß gegossen, das für eine direkte Trinkentnahme vorgesehen ist.

Nachdem das Mixgetränk aus dem Mixbecher ausgegossen wurde, muss der Mixbecher gründlich gereinigt werden. Anschließend kann ein weiteres Mixgetränk zubereitet werden. Um eine dauerhafte hygienische Lösung zu gewährleisten, muss der Mixbecher aus einem hochwertigen Material gefertigt sein, insbesondere aus Edelstahl oder Polycarbonat.

Es ist Aufgabe der vorliegenden Erfindung, einen verbesserten Trinkgefäßhalter, ein verbessertes Trinkgefäßsystem, ein verbessertes Mixsystem, ein verbessertes Verfahren zum Herstellen eines Mixgetränks und eine verbesserte Verwendung eines Trinkgefäßhalters aufzuzeigen.

Gemäß einem ersten Aspekt der Erfindung wird die Aufgabe gelöst durch einen Trinkgefäßhalter zur Aufnahme eines separaten Trinkgefäßes, wobei der Trinkgefäßhalter eine Aufhängung aufweist, die dafür ausgebildet ist, an einem Gegenstück eines Mixers lösbar gehalten zu werden, wobei die Aufhängung so dimensioniert ist, dass das vom Trinkgefäßhalter aufgenommene Trinkgefäß, wenn der Trinkgefäßhalter am Gegenstück gehalten ist, relativ zu einem Mixstab des Mixers so positioniert ist, dass der Mixstab in das Trinkgefäß hineinragt und mindestens ein im Trinkgefäß befindliche Bestandteil gemixt werden kann.

Eine Besonderheit der Erfindung liegt darin, dass nun statt eines herkömmlichen Mixbechers ein Trinkgefäßhalter zur Aufnahme eines separaten Trinkgefäßes verwendet werden kann. Dabei erfüllt die Kombination von Trinkgefäßhalter und Trinkgefäß nun die Funktion des Mixbechers. Daraus ergeben sich insbesondere die beiden folgenden Vorteile. Zum einen können nun innerhalb einer bestimmten Zeit mehr Mixgetränke hergestellt werden, da lediglich das Trinkgefäß ausgetauscht werden muss und nicht, wie bisher, der Mixbecher zunächst entleert und gereinigt werden muss. Zum anderen ermöglicht die Erfindung die Verwendung von persönlichen Trinkgefäßen und/oder Einweg-Trinkgefäßen. Dadurch lässt sich der Hygieneaspekt auf besonders einfache Weise lösen.

Es ist besonders bevorzugt, wenn das Trinkgefäß als Einweg-Trinkgefäß ausgeführt ist und dabei insbesondere aus beschichtetem, verstärktem Zellstoff, z.B. Pappe, oder aus einem preisgünstigen Kunststoff gefertigt ist. Da solche Einwegbecher für eine einmalige Verwendung vorgesehen sind, können besonders preisgünstige Materialien verwendet werden. Dabei ist es bevorzugt, wenn der Trinkgefäßhalter so dimensioniert ist, dass er Einwegbecher, die am Markt in großen Stückzahlen zu niedrigen Preisen verfügbar sind, aufnehmen kann. Bei solchen Bechern handelt es sich insbesondere um die Einwegbecher der Firma C.E.E. R. Schisler, Frankreich. Bei einigen Ausführungsformen kann das Trinkgefäß alternativ oder wahlweise auch ein Longdrinkglas sein, insbesondere solche Longdrinkgläser, die einen zumindest im Wesentlichen zylindrischen Körper aufweisen.

Es ist dabei vorteilhaft, wenn der Trinkgefäßhalter so ausgebildet und dimensioniert ist, dass der Mixstab, wenn der Trinkgefäßhalter am Gegenstück gehalten ist, mindestens ein Viertel der Höhenerstreckung des Trinkgefäßes in das Trinkgefäß hineinragt, bevorzugt mindestens eine Hälfte, besonders bevorzugt zwei Drittel und insbesondere drei Viertel. Alternativ oder zusätzlich ist es bevorzugt, dass der Abstand des Mixstabs, einschließlich des Mixkopf, zu einer Becherwand des Trinkgefäßes im gehaltenen Zustand mindestens 1 mm, bevorzugt mindestens 2 mm, besonders bevorzugt mindestens 5 mm und insbesondere mindestens 10 mm beträgt. Ganz besonders bevorzugt ist es, dass der Mixstab im gehaltenen Zustand zumindest in etwa mit der Mittelachse des Trinkgefäßes fluchtet.

Eine weitere Besonderheit der Erfindung liegt darin, dass der Trinkgefäßhalter auch mit bestehenden Mixern verwendet werden kann. Dies lässt sich besonders einfach dadurch erzielen, dass die Aufhängung des Trinkgefäßhalters dem Bereich des Mixbechers gleicht, zumindest ähnelt, mit dem der Mixbecher mit dem Gegenstück des Mixers lösbar gekoppelt wird. In diesem Fall ist die Aufhängung dafür ausgebildet, an einem für ein Halten eines Mixbechers ausgebildeten Gegenstück des Mixers lösbar gehalten zu werden. Auf diese Weise können Modifikationen an bestehenden Mixern, insbesondere im Hinblick auf das Gegenstück, und ein Austausch von Mixern vermieden werden. Mit anderen Worten können auch bestehende Mixer von der Erfindung profitieren.

Es sei aber bereits hier darauf hingewiesen, dass die Erfindung auch eine neue Art von Mixern ermöglicht, darunter insbesondere ein Mixsystem, wie es später noch erläutert wird. Außerdem sei erneut ausdrücklich darauf hingewiesen, dass selbstverständlich auch Gläser, insbesondere Longdrinkgläser mit zylindrischem Körper, als Trinkgefäß verwendet werden können.

Wie nachfolgend noch genauer gezeigt wird, ist der Trinkgefäßhalter bevorzugt so ausgebildet, dass er in gleicher oder ähnlicher Weise einen Sicherheitsschalter des Mixers betätigt, wie es ein zum Mixer gehörender Mixbecher tut. Damit kann die Erfindung sicherstellen, dass die Sicherheit des Mixers gewahrt bleibt, ohne dass Modifikationen am Mixer erforderlich wären.

Insgesamt ist festzustellen, dass die Erfindung unter anderem den Vorteil bietet, dass bestehende Mixer von der Erfindung profitieren können und keine Modifikationen am Mixer erforderlich. Natürlich lässt sich die Erfindung auch in Verbindung mit neuen Mixern und Mixsystemen einsetzen, da hier sogar eine zusätzliche Freiheit im Hinblick auf die Kopplung zwischen Trinkgefäßhalter und Mixer besteht. Bei einem neuen Mixer kann nämlich das Gegenstück frei entworfen werden, während es bei bestehenden Mixern festgelegt ist und, falls überhaupt möglich, eben nur durch eine Modifikation am Mixer geändert werden kann.

Dadurch ist die Aufgabe vollständig gelöst.

Bei einer vorteilhaften Ausgestaltung der Erfindung weist die Aufhängung ein hakenartiges oder zumindest teilweise umgebördeltes Endstück auf.

Diese Ausgestaltung bietet eine einfache Möglichkeit, den Trinkgefäßhalter mit dem bestehenden Gegenstück des Mixers zu koppeln. Zudem ermöglicht diese Ausgestaltung das Nachrüsten von bestehenden Mixern, da bei diesen der Mixbecher eine ähnliche Aufhängung aufweist und so bei bestehenden Systemen der Mixbecher einfach gegen den Trinkgefäßhalter getauscht werden kann.

Bei einer weiteren vorteilhaften Ausgestaltung der Erfindung weist das Endstück eine erste Krümmung auf, die einer zweiten Krümmung des Gegenstücks entspricht.

Auch bei dieser Ausgestaltung lässt sich die Erfindung besonders einfach bei bestehenden Mixern verwenden. Bei vielen Mixern wird der Mixbecher derart mit dem Gegenstück gekoppelt, dass ein Abschnitt eines Rands des Mixbechers am Gegenstück eingehängt wird. Da der Rand des Mixbechers gekrümmt ist, ist das Gegenstück in entsprechender Weise gekrümmt. Wenn das Endstück des Trinkgefäßhalters nun eine entsprechende Krümmung aufweist, kann der Trinkgefäßhalter in einfacher Weise auch bei bestehenden Mixern eingesetzt werden.

Bei einer weiteren vorteilhaften Ausgestaltung der Erfindung weist der Trinkgefäßhalter ein Halteelement auf, das einen Auflagebereich aufweist und dafür ausgebildet ist, das Trinkgefäß entlang der Längserstreckung in einer vorgegebenen Position zu halten.

Diese Ausgestaltung ermöglicht es auf einfache Weise, dass mindestens zwei verschiedene Arten von Trinkgefäßen mit dem Trinkgefäßhalter verwendet werden können. Dabei ist es bevorzugt, wenn der Auflagebereich zumindest im Wesentlichen senkrecht zu einer Längserstreckung des Trinkgefäßhalters ist. Dies wird anhand der Ausführungsbeispiele noch verdeutlicht. Im Hinblick auf die nachfolgend noch erläuterten Profile, ist es vorteilhaft, wenn der erste Durchmesser des ersten Profils zumindest in etwa dem zweiten Durchmesser des ersten Profils entspricht, insbesondere beide Durchmesser gleich sind.

Bei einer weiteren vorteilhaften Ausgestaltung der Erfindung weist das Halteelement eine Öffnung mit einem Innendurchmesser auf, wobei das Halteelement insbesondere ringförmig mit einem Außendurchmesser ist.

Diese Ausgestaltung ermöglicht es auf einfache Weise, dass nicht nur verschiedene Arten von Trinkgefäßen verwendet werden können, sondern auch, dass zusätzlich die Möglichkeit besteht, Höhenunterschiede zwischen den verschiedenen Arten zu kompensieren. Dabei ist der Innendurchmesser bevorzugt so gewählt, dass er größer ist als ein erster kleinster Durchmesser eines ersten Trinkgefäßes, das zumindest abschnittsweise konisch zuläuft, insbesondere ein Einwegbecher. Ein solches erstes Trinkgefäß gleitet dann in die Öffnung hinein, bis es aufgrund der formbedingten Durchmesserzunahme in der Öffnung stecken bleibt. Ferner ist der Innendurchmesser bevorzugt so gewählt, dass er kleiner ist als ein zweiter kleinster Durchmesser eines zweiten Trinkgefäßes, insbesondere ein Longdrinkglas. Ein solches zweites Trinkgefäß gleitet nicht in die Öffnung hinein. Selbst wenn das erste Trinkgefäß höher ist als das zweite Trinkgefäß, kann man es erreichen, dass eine erste obere Kante des ersten Trinkgefäßes im Trinkgefäßhalter zumindest in etwa auf derselben Höhe (bezogen auf eine Längserstreckung des Trinkgefäßhalters) zum Liegen kommt, wie eine zweite obere Kante des zweiten Trinkgefäßes. Dies wird anhand der Ausführungsbeispiele noch verdeutlicht. Die Öffnung ist bevorzugt zumindest in etwa kreisförmig ausgebildet.

Bei einer weiteren vorteilhaften Ausgestaltung der Erfindung weist der Trinkgefäßhalter bei einer Betrachtung entlang einer Längserstreckung des Trinkgefäßhalters ein erstes kreisbogenartiges Profil mit einem ersten Radius auf, wobei sich das erste Profil über einen Winkel α von mehr als 180° erstreckt, bevorzugt mehr als 210°, besonders bevorzugt mehr als 240° und insbesondere mehr als 270°.

Diese Ausgestaltung bietet dem Trinkgefäß einen besonders guten Halt, da das Trinkgefäß insbesondere zumindest abschnittsweise am ersten Profil anliegt. Dabei ist es bevorzugt, den ersten Durchmesser so zu wählen, dass das Trinkgefäß an seinem oberen Rand gehalten wird. Ferner ist es bevorzugt, wenn der erste Durchmesser zumindest in etwa so groß gewählt wird, wie der größte Innendurchmesser des Trinkgefäßes. Konkret ist es dabei bevorzugt, wenn der erste Durchmesser zwischen 50 mm und 120 mm, bevorzugt zwischen 65 mm und 105 mm, besonders bevorzugt zwischen 75 mm und 95 mm und insbesondere zwischen 80 und 90 mm liegt. Es sei darauf hingewiesen, dass das erste Profil geschlossen sein kann, um eine besonders hohe mechanische Stabilität zu erzielen.

Bei einer weiteren vorteilhaften Ausgestaltung der Erfindung weist der Trinkgefäßhalter bei einer Betrachtung entlang einer Längserstreckung des Trinkgefäßhalters zweites kreisbogenartiges Profil mit einem zweiten Radius auf, der kleiner ist als der erste Radius oder gleich dem ersten Radius ist, wobei sich das zweite Profil über einen Winkel β von mehr als 180° erstreckt, bevorzugt mehr als 210°, besonders bevorzugt mehr als 240° und insbesondere mehr als 270°.

Diese Ausgestaltung bietet dem Trinkgefäß einen besonders guten Halt, da das Trinkgefäß insbesondere zumindest abschnittsweise zusätzlich am zweiten Profil anliegt. Dabei ist es bevorzugt, den zweiten Durchmesser so zu wählen, dass das Trinkgefäß im Bereich seines unteren Rand gehalten wird. Ferner ist es bevorzugt, wenn der erste Durchmesser zumindest in etwa so groß gewählt wird, wie der kleinste Außendurchmesser des Trinkgefäßes. Konkret ist es dabei bevorzugt, wenn der zweite Durchmesser zwischen 30 mm und 100 mm, bevorzugt zwischen 45 mm und 85 mm, besonders bevorzugt zwischen 50 mm und 75 mm und insbesondere zwischen 55 und 65 mm liegt. Es sei darauf hingewiesen, dass das zweite Profil geschlossen sein kann, um eine besonders hohe mechanische Stabilität zu erzielen.

Im Zusammenspiel mit dem ersten Profil kann das Trinkgefäß im Trinkgefäßhalter besonders gut gehalten werden.

Bei einer weiteren vorteilhaften Ausgestaltung der Erfindung weist der Trinkgefäßhalter bei einer Betrachtung entlang einer Längserstreckung des Trinkgefäßhalters ein drittes kreisbogenartiges Profil mit einem dritten Radius auf, das entlang der Längserstreckung des Trinkgefäßhalters zwischen dem ersten und dem zweiten Profil angeordnet ist, wobei sich das dritte Profil über einen Winkel γ von weniger als 180° erstreckt, bevorzugt weniger als 150°, besonders bevorzugt weniger als 120° und insbesondere weniger als 90°.

Diese Ausgestaltung stellt gewissermaßen eine Aussparung dar, die eine besonders leichte Entnahme des Trinkgefäßes aus dem Trinkgefäßhalter ermöglicht.

Bei einer weiteren vorteilhaften Ausgestaltung der Erfindung weist der Trinkgefäßhalter in etwa in Richtung einer Längserstreckung des Trinkgefäßhalters ein Wandelement auf, das für eine Anlage des Trinkgefäßes ausgebildet ist und sich über mindestens 25% der Längserstreckung des Trinkgefäßes erstreckt, bevorzugt über mindestens 50%, besonders bevorzugt über mindestens 75% und insbesondere über mindestens 90%.

Diese Ausgestaltung des Trinkgefäßhalters ist besonders stabil.

Bei einer weiteren vorteilhaften Ausgestaltung der Erfindung weist das Endstück eine erste Krümmung mit einem Radius auf, der ungleich dem ersten Radius ist.

Diese Ausgestaltung bietet unter anderem die Besonderheit, dass der Radius bzw. der Durchmesser des gewünschten Trinkgefäßes unabhängig von dem Radius bzw. Durchmesser des Mixbechers gewählt werden kann, der für den Mixer vorgesehen ist. Dabei weist die erste Krümmung insbesondere einen Radius auf, der größer ist als die Hälfte des ersten Durchmessers, so dass ein Trinkgefäß gewählt werden kann, der einen geringeren Radius bzw. Durchmesser hat als der vorgesehene Mixbecher.

Bei einer weiteren vorteilhaften Ausgestaltung der Erfindung ist das Endstück von einem Grundkörper des Trinkgefäßhalters abgesetzt, insbesondere mittels eines Distanzstücks.

Diese Ausgestaltung ermöglicht eine besonders große Flexibilität dahingehend, dass die Dimensionen des Trinkgefäßes, insbesondere im Hinblick auf den Radius bzw. Durchmesser, anders gewählt werden können als beim vorgesehenen Mixbecher. Ist der Radius des gewünschten Trinkgefäßes z.B. kleiner als der des vorgesehenen Mixbechers, so kann man durch das Absetzen erreichen, dass der Trinkgefäßhalter zwar an dem bestehenden Gegenstück angekoppelt wird, insbesondere eingehängt wird, eine Mittelachse des Trinkgefäßhalters aber dennoch wieder mit der Mittelachse des Mixstabs zusammenfällt. Das Distanzstück kann separat ausgeführt sein, so dass auch die Möglichkeit besteht, verschiedene Distanzstücke zu verwenden. Eine einstückige Ausgestaltung des Distanzstücks mit dem Trinkgefäßhalter kann aber im Hinblick auf die Fertigung des Trinkgefäßhalters von Vorteil sein.

Bei einer weiteren vorteilhaften Ausgestaltung der Erfindung ist der Trinkgefäßhalter derart ausgestaltet, dass er nur ein geringeres Flüssigkeitsvolumen aufnehmen kann als das Fassungsvolumen des Trinkgefäßes, bevorzugt höchstens 80%, besonders bevorzugt höchstens 60% und insbesondere höchstens 40% des Fassungsvolumens.

Diese Ausgestaltung verdeutlicht, dass der Trinkgefäßhalter nicht im Hinblick auf eine aufzunehmende Flüssigkeitsmenge ausgestaltet werden muss, sondern bevorzugt allein im Hinblick auf die Kopplung mit dem Gegenstück und die Aufnahme des Trinkgefäßes optimiert werden kann.

Bei einer weiteren vorteilhaften Ausgestaltung der Erfindung ist der Trinkgefäßhalter für eine Flüssigkeitsaufnahme ungeeignet.

Einer der Vorteile dieser Ausgestaltung liegt darin, dass der Trinkgefäßhalter besonders leicht gereinigt und getrocknet werden kann.

Gemäß einem zweiten Aspekt der Erfindung wird die Aufgabe gelöst durch ein Trinkgefäßsystem mit einem zuvor beschriebenen Trinkgefäßhalter und einem Trinkgefäß, wobei Trinkgefäßhalter und Trinkgefäß so dimensioniert sind, dass das Trinkgefäß im Trinkgefäßhalter während eines Mixvorgangs, der innerhalb des Trinkgefä-βes stattfindet, festgehalten wird.

Das Trinkgefäß wird dabei relativ zum Trinkgefäßhalter und/oder relativ zum Mixer festgehalten und bleibt daher zuverlässig in der Position, die für den Mixvorgang erforderlich ist. Es ist besonders vorteilhaft, wenn das Trinkgefäßsystem ein erstes Trinkgefäß einer ersten Art mit einem zumindest bereichsweise konischem Verlauf und ein zweites Trinkgefäß einer zweiten Art mit einer zumindest in etwa zylinderartigen Form aufweist, wobei das erste Trinkgefäß bevorzugt ein Einwegbecher ist und das zweite Trinkgefäß bevorzugt ein Longdrinkglas ist.

Gemäß einem dritten Aspekt der Erfindung wird die Aufgabe gelöst durch ein Mixsystem mit einem zuvor beschriebenen Trinkgefäßhalter und einem Mixer mit einem Mixstab, wobei der Trinkgefäßhalter für ein Trinkgefäß so dimensioniert ist, dass das Trinkgefäß im Trinkgefäßhalter während eines Mixvorgangs, der mittels des Mixstabs innerhalb des Trinkgefäßes stattfindet, festgehalten wird.

Gemäß einem vierten Aspekt der Erfindung wird die Aufgabe gelöst durch ein Verfahren zum Herstellen eines Mixgetränks mit den folgenden Schritten:
- Bereitstellen eines Mixers mit einem Mixstab,
- Bereitstellen eines Trinkgefäßes, das für eine direkte Trinkentnahme vorgesehen ist,
- Bereitstellen eines Trinkgefäßhalters, der so dimensioniert ist, dass das Trinkgefäß im Trinkgefäßhalter während eines Mixvorgangs, der innerhalb des Trinkgefäßes stattfindet, festgehalten wird, wobei der Trinkgefäßhalter eine Aufhängung aufweist, die dafür ausgebildet ist, an einem Gegenstück des Mixers lösbar gehalten zu werden,
- Einsetzen des Trinkgefäßes in den Trinkgefäßhalter,
- Befüllen des Trinkgefäßes mit mindestens einem Bestandteil,
- Koppeln des Trinkgefäßhalters mit dem Gegenstück, so dass das vom Trinkgefäßhalter aufgenommene Trinkgefäß relativ zum Mixstab des Mixers so positioniert ist, dass der Mixstab in das Trinkgefäß hineinragt und der mindestens eine Bestandteil gemixt werden kann.

Gemäß einem fünften Aspekt der Erfindung wird die Aufgabe gelöst durch die Verwendung eines Trinkgefäßhalters, insbesondere eines zuvor beschriebenen Trinkgefäßhalters, zum Aufnehmen eines Trinkgefäßes und zum Koppeln des Trinkgefäßhalters mit einem Gegenstück eines Mixers, so dass das vom Trinkgefäßhalter aufgenommene Trinkgefäß relativ zu einem Mixstab des Mixers so positioniert ist, dass der Mixstab in das Trinkgefäß hineinragt und mindestens ein in das Trinkgefäß gefüllter Bestandteil gemixt werden kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung näher dargestellt und werden in der nachfolgenden Beschreibung näher erläutert. Es zeigen:
- Fig. 1: eine erste Ausführungsform eines Trinkgefäßhalters 10;
- Fig. 2: eine zweite Ausführungsform eines Trinkgefäßhalters;
- Fig. 3: eine schematische Darstellung eines bekannten Mixers mit Mixbecher;
- Fig. 4: dem Mixer gemäß Fig. 3, wobei der Mixbecher mit dem Gegenstück gekoppelt ist;
- Fig. 5: ein Ausführungsbeispiel eines Mixsystems mit einem Trinkgefäßhalter, der mit dem Gegenstück gekoppelt ist;
- Fig. 6: ein Ausführungsbeispiel eines Trinkgefäßsystems, das mit dem Gegenstück gekoppelt ist;
- Fig. 7: eine vergrößerte Darstellung der zweiten Ausführungsform des Trinkgefäßhalters;
- Fig. 8: eine Seitenansicht der zweiten Ausführungsform des Trinkgefäßhalters mit einer ersten, einer zweiten, einer dritten und einer vierten Schnittlinie;
- Fig. 9: die Schnittebene des ersten Schnitts;
- Fig. 10: die Schnittebene des zweiten Schnitts;
- Fig. 11: die Schnittebene des dritten Schnitts;
- Fig. 12: die Schnittebene des vierten Schnitts;
- Fig. 13: eine Variante des Endstücks mit geringerer Krümmung;
- Fig. 14: eine Variante des Endstücks mit größerer Krümmung;
- Fig. 15: eine dritte Ausführungsform eines Trinkgefäßhalters;
- Fig. 16: eine Seitenansicht der Ausführungsform gemäß Fig. 15;
- Fig. 17: ein Halteelement der Ausführungsform gemäß Fig. 15;
- Fig. 18: die Ausführungsform gemäß Fig. 15 mit eingesetztem Trinkbecher;
- Fig. 19: die Ausführungsform gemäß Fig. 15 mit eingesetztem Glas; und
- Fig. 20: ein Verfahren zum Herstellen eines Mixgetränks.

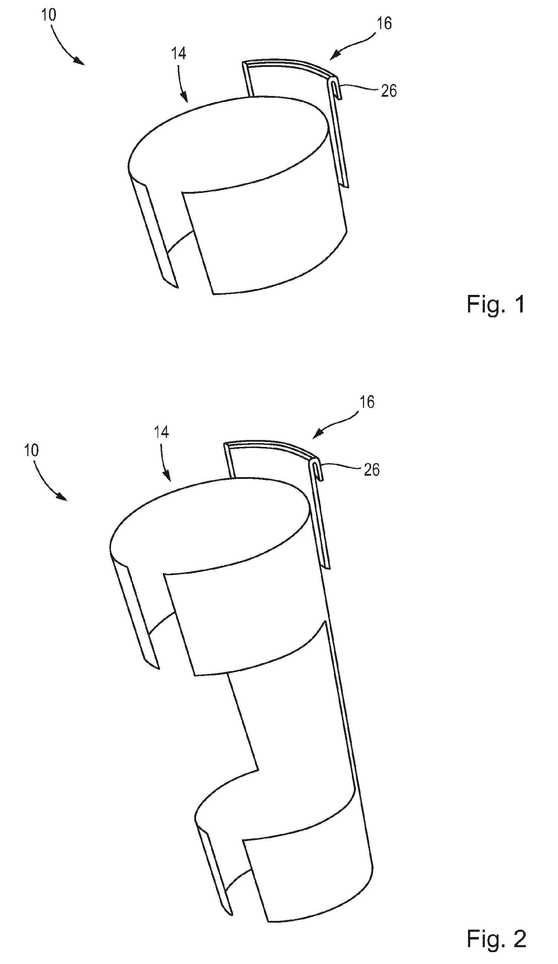

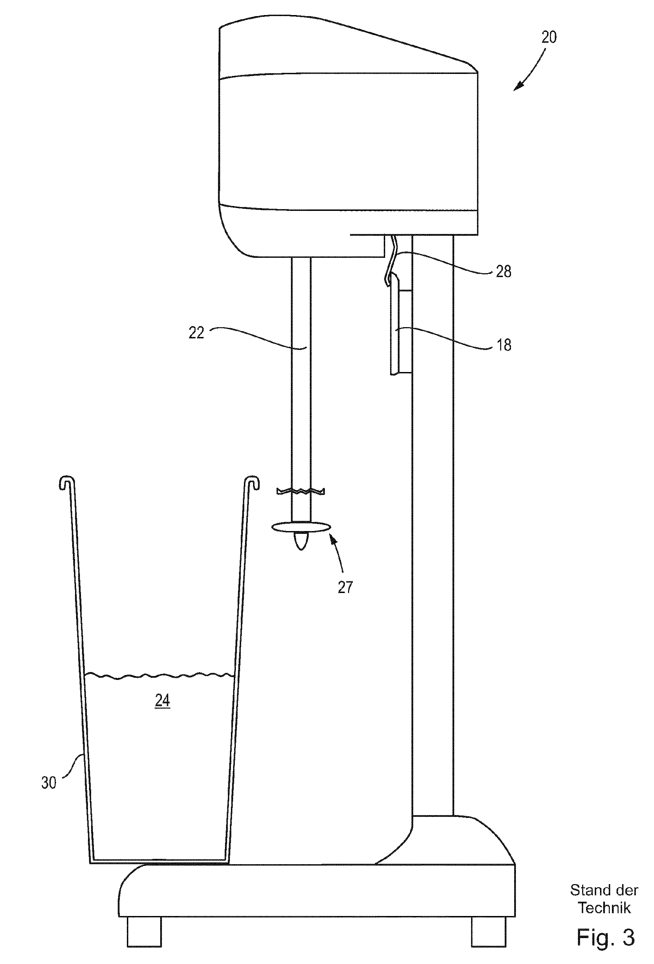

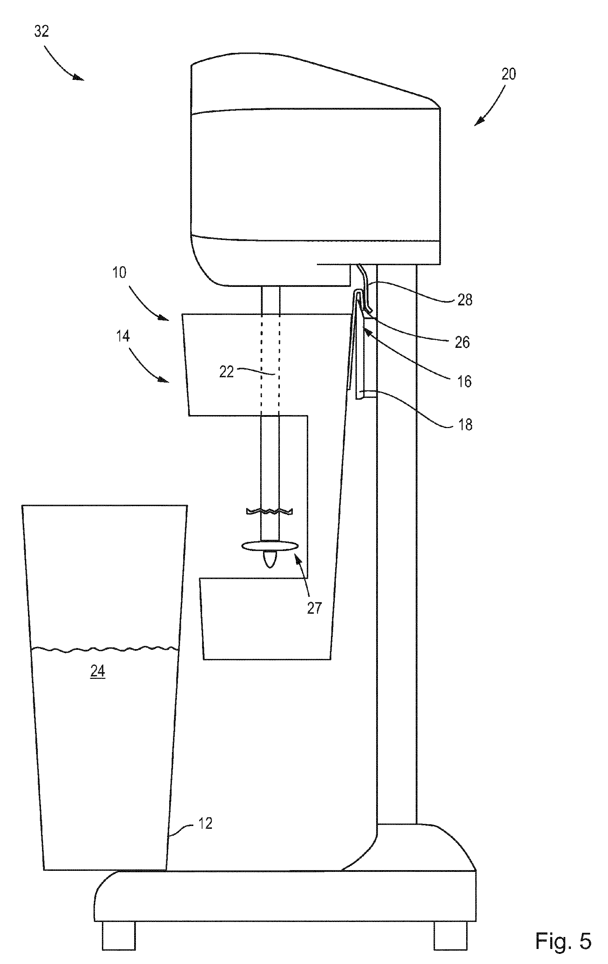

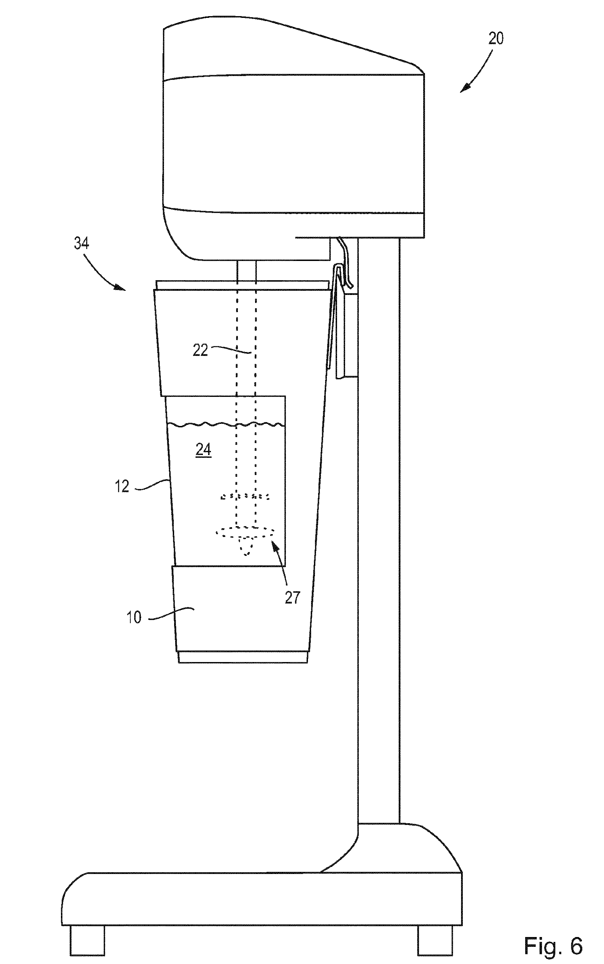

Fig. 1 zeigt eine erste Ausführungsform eines Trinkgefäßhalters 10 zur Aufnahme eines separaten Trinkgefäßes 12 (siehe Fig. 5). Der Trinkgefäßhalter 10 weist einen Grundkörper 14 und eine Aufhängung 16 auf. Die Aufhängung 16 ist dafür ausgebildet, an einem Gegenstück 18 (siehe Fig. 3) eines Mixers 20 (siehe Fig. 3) lösbar gehalten zu werden. Dabei ist die Aufhängung 16 so dimensioniert, dass das vom Trinkgefäßhalter 10 aufgenommene Trinkgefäß 12, wenn der Trinkgefäßhalter 10 am Gegenstück 18 gehalten ist (siehe Fig. 6), relativ zu einem Mixstab 22 (siehe Fig. 3) des Mixers 20 so positioniert ist, dass der Mixstab 22 in das Trinkgefäß 12 hineinragt und mindestens ein im Trinkgefäß 12 befindlicher Bestandteil 24 (siehe Fig. 6) gemixt werden kann.

Die Aufhängung 16 weist ein hakenartiges Endstück 26 auf, das hier mittels einer Umbördelung hergestellt wurde. Das Endstück 26 weist zudem eine erste Krümmung auf, die einer zweiten Krümmung (nicht gezeigt) des Gegenstücks 18 entspricht.

Der Trinkgefäßhalter 10 ist für eine Flüssigkeitsaufnahme ungeeignet.

Fig. 2 zeigt eine zweite Ausführungsform eines Trinkgefäßhalters 10. Alle bisher eingeführten Bezugszeichen und gegebene Erläuterungen gelten auch für diese Ausführungsform.

Fig. 3 zeigt einen Mixer 20, der aus dem Stand der Technik bekannt ist, mit einem Mixstab 22, einem Mixkopf 27, einem Sicherheitsschalter 28, einem Gegenstück 18 und einem zugehörigen Mixbecher 30, der hier zur Verdeutlichung der Erfindung im Schnitt dargestellt ist.

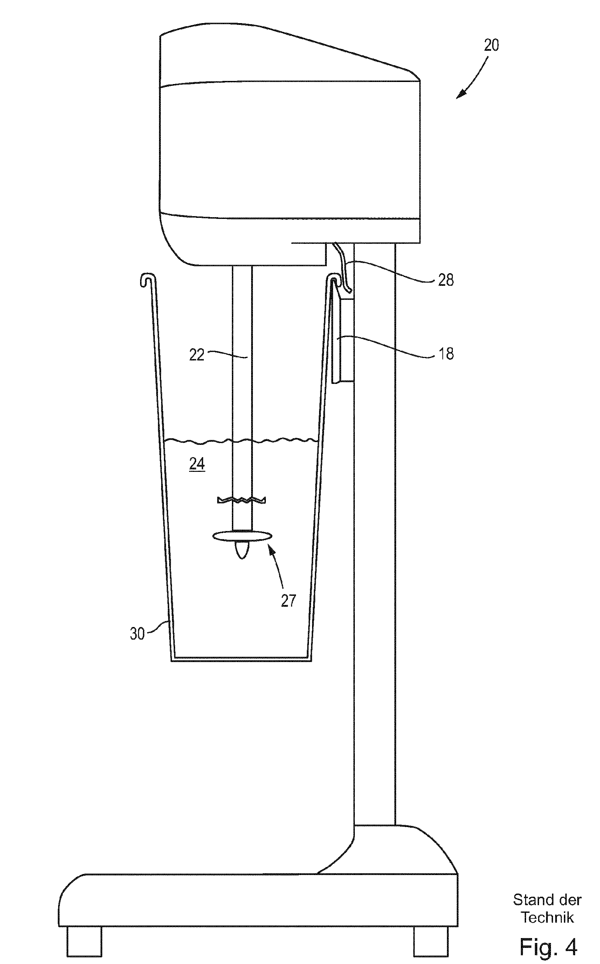

Fig. 4 zeigt den Mixer 20 mit dem Mixbecher 30, wobei der Mixbecher 30 mit dem Gegenstück 18 gekoppelt ist, insbesondere am Gegenstück 18 eingehängt ist.

Da der Sicherheitsschalter 28 nun ausgelenkt ist, kann der Mixer 20 eingeschaltet werden, so dass der Mixstab 22 betätigt wird und der Bestandteil 24 bzw. die Bestandteile 24 im Mixbecher 30 gemischt werden.

Fig. 5 zeigt eine Ausführungsform eines Mixsystems 32 mit einem Trinkgefäßhalter 10 und einem Mixer 20 mit einem Mixstab 22, wobei der Trinkgefäßhalter 10 für ein separates Trinkgefäß 12 so dimensioniert ist, dass das Trinkgefäß 12 im Trinkgefäßhalter 10 während eines Mixvorgangs, der mittels des Mixstabs 22 innerhalb des Trinkgefäßes 12 stattfindet, festgehalten wird. Das Trinkgefäß 12 ist hier vereinfacht schematisch dargestellt.

Es ist zu erkennen, dass der Trinkgefäßhalter 10 mit dem Endstück 26 der Aufhängung 16 mit dem Gegenstück 18 gekoppelt ist. Dabei ist der Trinkgefäßhalter 10 hier ähnlich eingehängt wie der zuvor gezeigte Mixbecher 30. Die Aufhängung 16 lenkt auch hier den Sicherheitsschalter 28 aus.

Fig. 6 zeigt ein Trinkgefäßsystem 34 mit einem Trinkgefäßhalter 10 und einem Trinkgefäß 12, wobei Trinkgefäßhalter 10 und Trinkgefäß 12 so dimensioniert sind, dass das Trinkgefäß 12 im Trinkgefäßhalter 10 während eines Mixvorgangs, der innerhalb des Trinkgefäßes 12 stattfindet, festgehalten wird. Es ist zu erkennen, dass das Trinkgefäßsystem 34 den Mixbecher 30 des Mixers 20 gemäß Fig. 3 ersetzt.

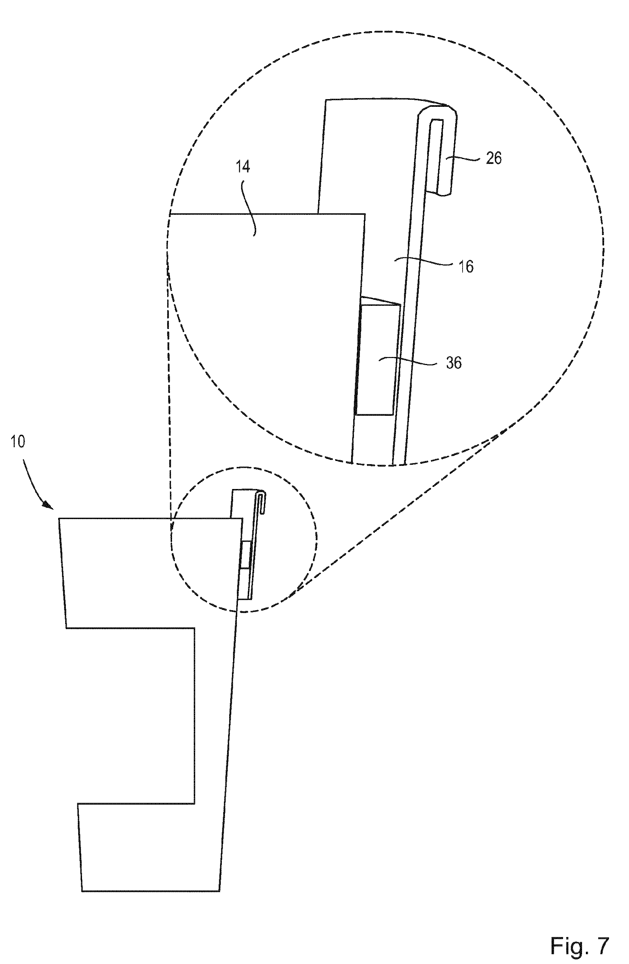

Fig. 7 zeigt eine Vergrößerung eines Teils des Trinkgefäßhalters 10, wobei zu erkennen ist, dass das Endstück 26 vom Grundkörper 14 des Trinkgefäßhalters 10 abgesetzt ist, hier mittels eines Distanzstücks 36. Bei dieser Ausgestaltung ist auch die Aufhängung 16, die das Endstück 26 aufweist, vom Grundkörper 14 mittels des Distanzstücks 36 abgesetzt.

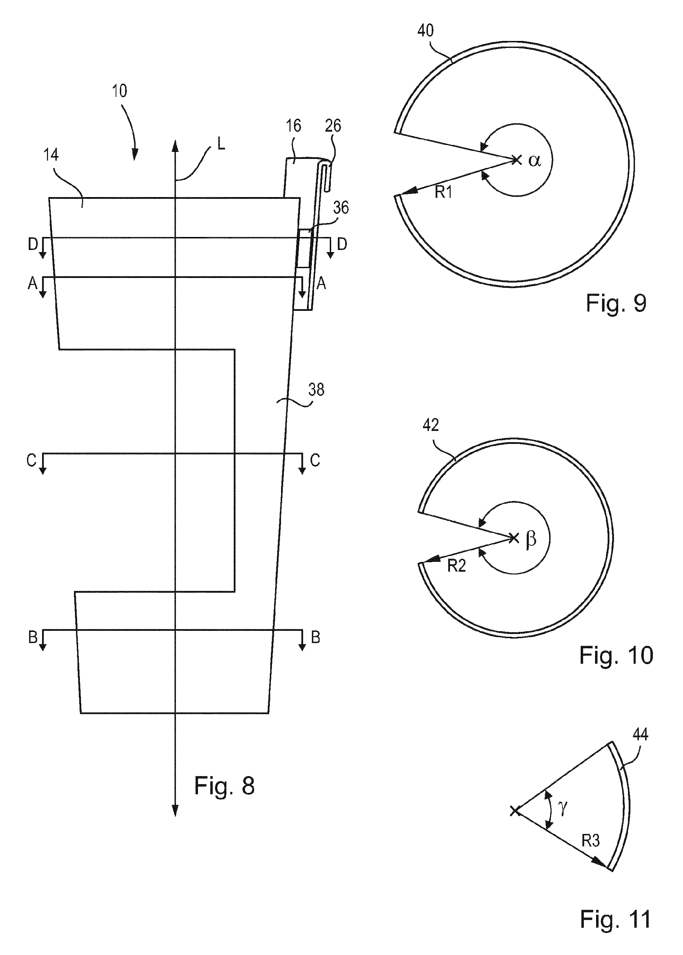

Fig. 8 zeigt den Trinkgefäßhalter 10 wieder in einer Seitenansicht, wobei eine erste Schnittlinie A, eine zweite Schnittlinie B, eine dritte Schnittlinie C und eine vierte Schnittlinie D eingezeichnet sind.

Außerdem ist gezeigt, dass der Trinkgefäßhalter 10 in etwa in Richtung seiner Längserstreckung L ein Wandelement 38 aufweist, das für eine Anlage des Trinkgefäßes 12 ausgebildet ist. Wie man der Fig. 6 entnehmen kann, erstreckt sich das Wandelement 38 hier über ca. 50 % der Längserstreckung des Trinkgefäßes 12.

Fig. 9 zeigt die Schnittebene des ersten Schnitts A. Es ist zu erkennen, dass der Trinkgefäßhalter 10 bei einer Betrachtung entlang seiner Längserstreckung L ein erstes kreisbogenartiges Profil 40 mit einem ersten Durchmesser R1 aufweist, wobei sich das erste Profil über einen Bogen mit dem Winkel α erstreckt. Der Winkel α beträgt hier ungefähr 330°.

Fig. 10 zeigt die Schnittebene des zweiten Schnitts B. Es ist zu erkennen, dass der Trinkgefäßhalter 10 bei einer Betrachtung entlang seiner Längserstreckung L ein zweites kreisbogenartiges Profil 42 mit einem ersten Durchmesser R2 aufweist, der kleiner ist als der erste Radius R1. Das zweite Profil 42 erstreckt sich hier über einen Winkel β, der ca. 330° beträgt.

Fig. 11 zeigt die Schnittebene des dritten Schnitts C. Es ist zu erkennen, dass der Trinkgefäßhalter 10 bei einer Betrachtung entlang seiner Längserstreckung L ein drittes kreisbogenartiges Profil 44 aufweist, das entlang der Längserstreckung L ein des Trinkgefäßhalters 10 zwischen dem ersten und dem zweiten Profil 40, 42 angeordnet ist. Das dritte Profil 44 erstreckt sich über einen Winkel γ, der hier ungefähr 60° beträgt.

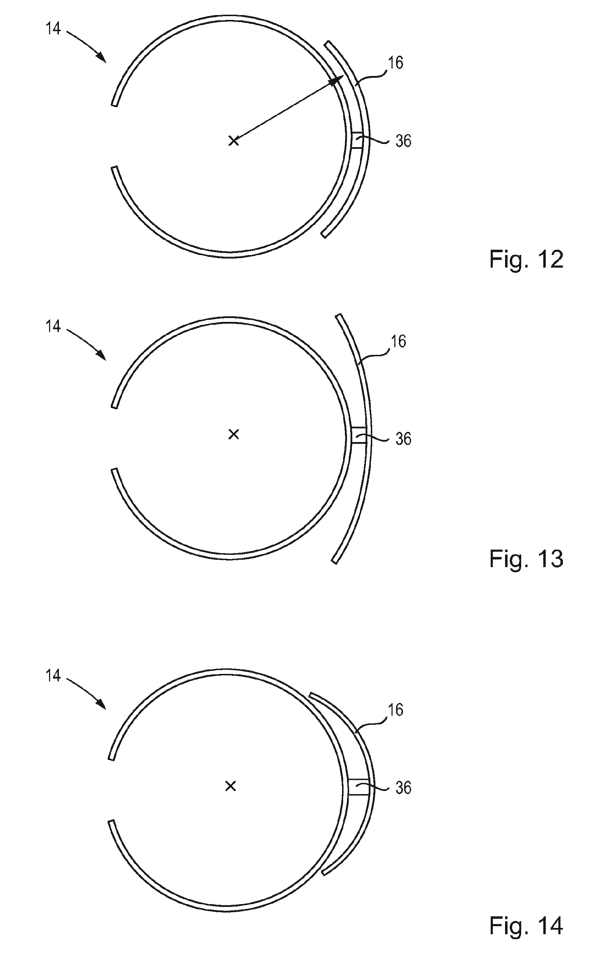

Fig. 12 zeigt die Schnittebene des vierten Schnitts D. Es ist zu erkennen, dass die Aufhängung 16 - und damit bei dieser Ausführungsform auch das Endstück 26 - parallel zum Grundkörper 14 verläuft. Bei dieser Ausgestaltung verläuft das Endstück 26 daher konzentrisch zum Grundkörper 14. Der Radius R4, auf dem das Endstück 26 liegt, ist größer als der entsprechende Radius des Grundkörpers 14.

Fig. 13 zeigt, dass die Krümmung des Endstücks 26 auch geringer sein kann als der entsprechende Abschnitt des Grundkörpers 14. Mit anderen Worten, der Radius der Krümmung des Endstücks 26 kann deutlich größer gewählt werden als der Radius des Grundkörpers 14. Das Distanzstück 36 ist insbesondere bei dieser Ausgestaltung optional.

Fig. 14 zeigt, dass der Radius der Krümmung des Endstücks 26 auch gleich dem Radius des Grundkörpers 14 oder aber kleiner als dieser Radius sein kann. Diese Variante lässt sich mittels des Distanzstücks 36 besonders einfach realisieren.

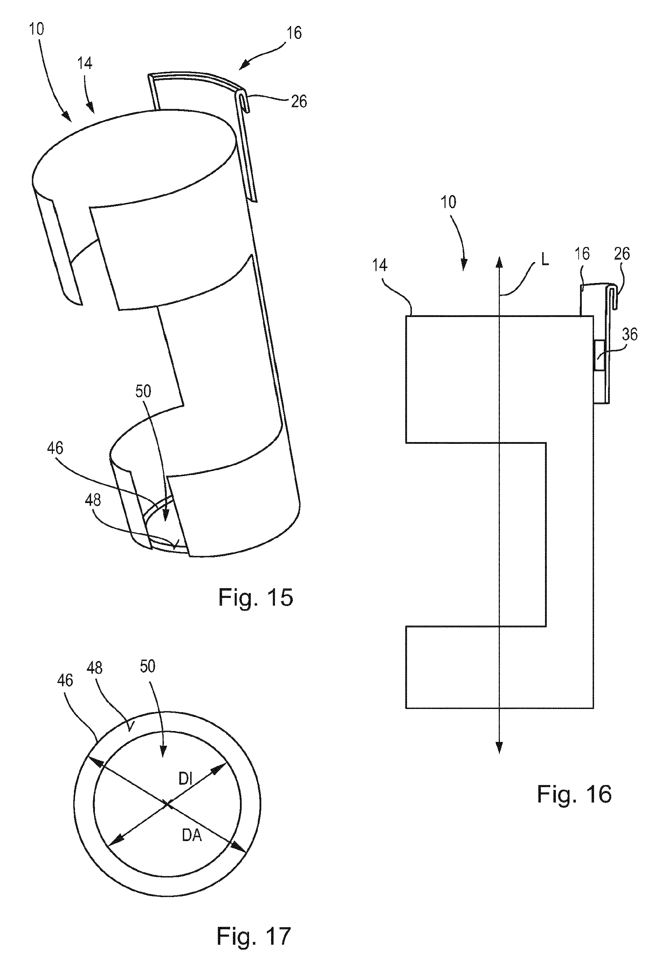

Fig. 15 zeigt eine dritte Ausführungsform eines Trinkgefäßhalters 10. Im Hinblick auf die Erläuterungen zu den Figuren 9 und 10 ist der zweite Radius R2 hier zumindest in etwa gleich zum ersten Radius R1. Der Trinkgefäßhalter 10 weist ein Halteelement 46 auf, das einen Auflagebereich 48 aufweist, der zumindest im Wesentlichen senkrecht zu einer Längserstreckung L des Trinkgefäßhalters 10 ist, wobei das Halteelement 46 dafür ausgebildet ist, das Trinkgefäß 12 entlang der Längserstreckung L in einer vorgegebenen Position zu halten.

Fig. 16 eine Seitenansicht der Ausführungsform gemäß Fig. 15, wobei hier auch die Längserstreckung L dargestellt ist.

Fig. 17 zeigt für die Ausführungsform gemäß Fig. 15, dass das Halteelement 46 eine zumindest in etwa kreisförmige Öffnung 50 mit einem Innendurchmesser DI aufweist, wobei das Halteelement 46 insbesondere ringförmig mit einem Außendurchmesser DA ist.

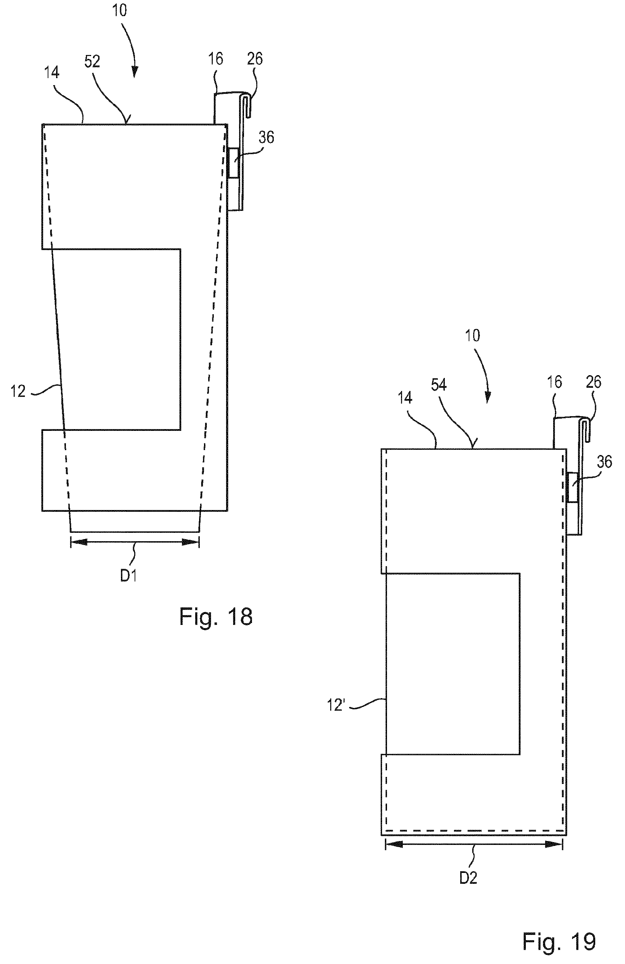

Fig. 18 zeigt die Ausführungsform gemäß Fig. 15 mit eingesetztem ersten Trinkgefäß 12, hier ein Einwegbecher. Der Innendurchmesser DI der Öffnung 50 ist hier so gewählt, dass er größer ist als ein erster kleinster Durchmesser D1 des ersten Trinkgefäßes 12. Ein solches erstes Trinkgefäß 12 gleitet dann in die Öffnung 50 hinein, bis es aufgrund der formbedingten Durchmesserzunahme in der Öffnung stecken bleibt.

Fig. 19 die Ausführungsform gemäß Fig. 15 mit eingesetztem zweiten Trinkgefäß 12', hier ein Longdrinkglas. Der Innendurchmesser DI ist hier so gewählt, dass er kleiner ist als ein zweiter kleinster Durchmesser D2 eines zweiten Trinkgefäßes 12'. Daher gleitet ein solches zweites Trinkgefäß 12' nicht in die Öffnung 50 hinein.

Der Vergleich der Figuren 18 und 19 macht deutlich: Selbst wenn das erste Trinkgefäß 12 höher ist als das zweite Trinkgefäß 12', kann man es erreichen, dass eine erste obere Kante 52 des ersten Trinkgefäßes 12 im Trinkgefäßhalter 10 zumindest in etwa auf derselben Höhe (bezogen auf eine Längserstreckung L des Trinkgefäßhalters 10) zum Liegen kommt, wie eine zweite obere Kante 54 des zweiten Trinkgefäßes 12'.

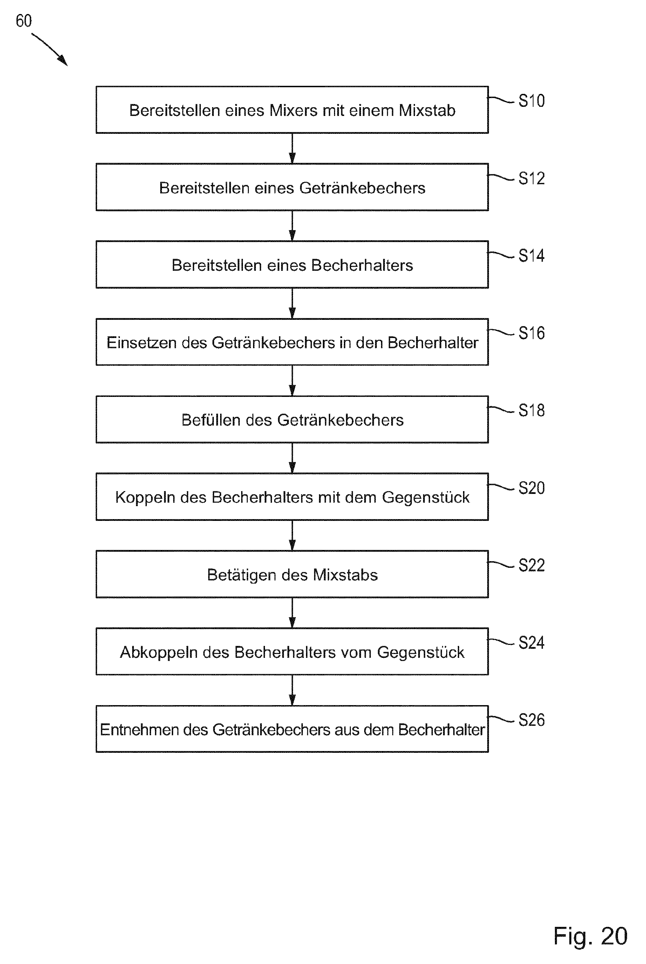

Fig. 20 zeigt ein Verfahren 60 zum Herstellen eines Mixgetränks. Zunächst wird im Schritt S10 ein Mixer 20 mit einem Mixstab 22 bereitgestellt. Dann wird in Schritt S12 ein Trinkgefäß 12 bereitgestellt, das für eine direkte Trinkentnahme vorgesehen ist.

In einem weiteren Schritt S14 wird ein Trinkgefäßhalter 10 bereitgestellt, wer so dimensioniert ist, dass das Trinkgefäß 12 im Trinkgefäßhalter 10 während eines Mixvorgangs, der innerhalb des Trinkgefäßes 12 stattfindet, festgehalten wird, wobei der Trinkgefäßhalter 10 eine Aufhängung 16 aufweist, die dafür ausgebildet ist, an einem Gegenstück des Mixers 20 lösbar gehalten zu werden.

Im folgenden Schritt S16 wird das Trinkgefäß 12 in den Trinkgefäßhalter 10 eingesetzt. Dann wird das Trinkgefäß 12 im Schritt S18 mit mindestens einem Bestandteil 24 befüllt. Im Schritt S24 wird der Trinkgefäßhalter 10 mit dem Gegenstück 18 gekoppelt, so dass das vom Trinkgefäßhalter 10 aufgenommene Trinkgefäß 12 relativ zum Mixstab 22 des Mixers 20 so positioniert ist, dass der Mixstab 22 in das Trinkgefäß 12 hineinragt und der mindestens eine Bestandteil 24 gemixt werden kann.

Im Schritt S22 wird der Mixstab 22 betätigt. Nach Abschluss des Mixvorgangs wird der Trinkgefäßhalter 10 vom Gegenstück 18 im Schritt S24 abgekoppelt. Schließlich wird im Schritt S26 das Trinkgefäß 12 aus dem Trinkgefäßhalter 10 entnommen. Insgesamt wurden ein Trinkgefäßhalter 10, ein Trinkgefäßsystem 34, ein Mixsystem 32, ein Verfahren 60 zum Herstellen eines Mixgetränks und eine Verwendung eines Trinkgefäßhalters 10 offenbart, die erhebliche Verbesserungen gegenüber bekannten Mixern 20 mit Mixbecher 30 bringen.

## Patentansprüche

1. Trinkgefäßhalter (10) zur Aufnahme eines separaten Trinkgefäßes (12), wobei der Trinkgefäßhalter (10) eine Aufhängung (16) aufweist, die dafür ausgebildet ist, an einem Gegenstück (18) eines Mixers (20) lösbar gehalten zu werden, wobei die Aufhängung (16) so dimensioniert ist, dass das vom Trinkgefäßhalter (10) aufgenommene Trinkgefäß (12), wenn der Trinkgefäßhalter (10) am Gegenstück (18) gehalten ist, relativ zu einem Mixstab (22) des Mixers (20) so positioniert ist, dass der Mixstab (22) in das Trinkgefäß (12) hineinragt und mindestens ein im Trinkgefäß (12) befindlicher Bestandteil (24) gemixt werden kann.

2. Trinkgefäßhalter nach Anspruch 1, wobei die Aufhängung (16) ein hakenartiges oder zumindest teilweise umgebördeltes Endstück (26) aufweist.

3. Trinkgefäßhalter nach einem der vorhergehenden Ansprüche, wobei das Endstück (26) eine erste Krümmung aufweist, die einer zweiten Krümmung des Gegenstücks (18) entspricht.

4. Trinkgefäßhalter nach einem der vorhergehenden Ansprüche, ferner mit einem Halteelement (46), das einen Auflagebereich (48) aufweist und dafür ausgebildet ist, das Trinkgefäß (12) entlang der Längserstreckung (L) in einer vorgegebenen Position zu halten.

5. Trinkgefäßhalter nach Anspruch 4, wobei das Halteelement (46) eine Öffnung (50) mit einem Innendurchmesser (DI) aufweist und das Halteelement (46) insbesondere ringförmig mit einem Außendurchmesser (DA) ist.

6. Trinkgefäßhalter nach einem der vorhergehenden Ansprüche, wobei der Trinkgefäßhalter (10) bei einer Betrachtung entlang einer Längserstreckung (L) des Trinkgefäßhalters (10) ein erstes kreisbogenartiges Profil (40) mit einem ersten Radius (R1) aufweist, wobei sich das erste Profil über einen ersten Winkel (α) von mehr als 180° erstreckt, bevorzugt mehr als 210°, besonders bevorzugt mehr als 240° und insbesondere mehr als 270°.

7. Trinkgefäßhalter nach Anspruch 6, wobei der Trinkgefäßhalter (10) bei einer Betrachtung entlang einer Längserstreckung (L) des Trinkgefäßhalters (10) ein zweites kreisbogenartiges Profil (42) mit einem zweiten Radius (R2) aufweist, der kleiner ist als der erste Radius (R1) oder gleich dem ersten Radius (R1) ist, wobei sich das zweite Profil (42) über einen zweiten Winkel (β) von mehr als 180° erstreckt, bevorzugt mehr als 210°, besonders bevorzugt mehr als 240° und insbesondere mehr als 270°.

8. Trinkgefäßhalter nach Anspruch 7, wobei der Trinkgefäßhalter (10) bei einer Betrachtung entlang einer Längserstreckung (L) des Trinkgefäßhalters (10) ein drittes kreisbogenartiges Profil (44) mit einem dritten Radius (R3) aufweist, das entlang der Längserstreckung (L) des Trinkgefäßhalters (10) zwischen dem ersten und dem zweiten Profil (40, 42) angeordnet ist, wobei sich das dritte Profil (44) über einen dritten Winkel (γ) von weniger als 180° erstreckt, bevorzugt weniger als 150°, besonders bevorzugt weniger als 120° und insbesondere weniger als 90°.

9. Trinkgefäßhalter nach einem der vorhergehenden Ansprüche, wobei der Trinkgefäßhalter (10) in etwa in Richtung einer Längserstreckung (L) des Trinkgefäßhalters (10) ein Wandelement (38) aufweist, das für eine Anlage des Trinkgefäßes (12) ausgebildet ist und sich über mindestens 25% der Längserstreckung des Trinkgefäßes (12) erstreckt, bevorzugt über mindestens 50%, besonders bevorzugt über mindestens 75% und insbesondere über mindestens 90%.

10. Trinkgefäßhalter nach einem der Ansprüche 4 bis 9, wobei das Endstück (26) eine erste Krümmung mit einem Radius aufweist, der ungleich dem ersten Radius (R1) ist.

11. Trinkgefäßhalter nach einem der vorhergehenden Ansprüche, wobei das Endstück (26) von einem Grundkörper (14) des Trinkgefäßhalters (10) abgesetzt ist, insbesondere mittels eines Distanzstücks (36).

12. Trinkgefäßsystem (34) mit einem Trinkgefäßhalter (10) nach einem der vorhergehenden Ansprüche und einem Trinkgefäß (12), wobei Trinkgefäßhalter (10) und Trinkgefäß (12) so dimensioniert sind, dass das Trinkgefäß (12) im Trinkgefäßhalter (10) während eines Mixvorgangs, der innerhalb des Trinkgefäßes (12) stattfindet, festgehalten wird.

13. Mixsystem (32) mit einem Trinkgefäßhalter (10) nach einem der vorhergehenden Ansprüche und einem Mixer (20) mit einem Mixstab (22), wobei der Trinkgefäßhalter (10) für ein Trinkgefäß (12) so dimensioniert ist, dass das Trinkgefäß (12) im Trinkgefäßhalter (10) während eines Mixvorgangs, der mittels des Mixstabs (22) innerhalb des Trinkgefäßes (12) stattfindet, festgehalten wird.

14. Verfahren (60) zum Herstellen eines Mixgetränks mit den folgenden Schritten:
- Bereitstellen (S10) eines Mixers (20) mit einem Mixstab (22),
- Bereitstellen (S12) eines Trinkgefäßes (12), das für eine direkte Trinkentnahme vorgesehen ist,
- Bereitstellen (S14) eines Trinkgefäßhalters (10), der so dimensioniert ist, dass das Trinkgefäß (12) im Trinkgefäßhalter (10) während eines Mixvorgangs, der innerhalb des Trinkgefäßes (12) stattfindet, festgehalten wird, wobei der Trinkgefäßhalter (10) eine Aufhängung (16) aufweist, die dafür ausgebildet ist, an einem Gegenstück (18) des Mixers (20) lösbar gehalten zu werden,
- Einsetzen (S16) des Trinkgefäßes (12) in den Trinkgefäßhalter (10),
- Befüllen (S18) des Trinkgefäßes (12) mit mindestens einem Bestandteil (24),
- Koppeln (S20) des Trinkgefäßhalters (10) mit dem Gegenstück (18), so dass das vom Trinkgefäßhalter (10) aufgenommene Trinkgefäß (12) relativ zum Mixstab (22) des Mixers (20) so positioniert ist, dass der Mixstab (22) in das Trinkgefäß (12) hineinragt und der mindestens eine Bestandteil (24) gemixt werden kann.

15. Verwendung eines Trinkgefäßhalters (10), insbesondere nach einem der Ansprüche 1 bis 11 zum Aufnehmen eines Trinkgefäßes (12) und zum Koppeln des Trinkgefäßhalters (10) mit einem Gegenstück (18) eines Mixers (20), so dass das vom Trinkgefäßhalter (10) aufgenommene Trinkgefäß (12) relativ zu einem Mixstab (22) des Mixers (20) so positioniert ist, dass der Mixstab (22) in das Trinkgefäß (12) hineinragt und mindestens ein in das Trinkgefäß (12) gefüllter Bestandteil (24) gemixt werden kann.
